# EUROPEAN PATENT SPECIFICATION

(11) **EP 2 207 138 B1**
(45) Date of publication and mention of the grant of the patent: **28.12.2016**
(21) Application number: 08845771.8
(22) Date of filing: 29.10.2008
(51) Int. Cl.: G01C 11/06, G06T 7/20

(54) **HOUSE MOVEMENT DETERMINING METHOD, HOUSE MOVEMENT DETERMINING PROGRAM, HOUSE MOVEMENT DETERMINING IMAGE GENERATING METHOD, AND HOUSE MOVEMENT DETERMINING IMAGE**
VERFAHREN ZUR BESTIMMUNG VON HAUSBEWEGUNGEN, PROGRAMM ZUR BESTIMMUNG VON HAUSBEWEGUNGEN, BILDERZEUGUNGSVERFAHREN ZUR BESTIMMUNG VON HAUSBEWEGUNGEN UND BILD ZUR BESTIMMUNG VON HAUSBEWEGUNGEN
PROCÉDÉ DE DÉTERMINATION DU DÉPLACEMENT DE MAISONS, PROGRAMME DE DÉTERMINATION DU DÉPLACEMENT DE MAISONS, PROCÉDÉ DE GÉNÉRATION D'IMAGES DE DÉTERMINATION DU DÉPLACEMENT DE MAISONS ET IMAGE DE DÉTERMINATION DU DÉPLACEMENT DE MAISONS

(30) Priority: 30.10.2007 JP 2007281276
(43) Date of publication of application: 14.07.2010
(73) Proprietor: PASCO Corporation, Tokyo 153-0043 (JP)
(72) Inventor: OHTSUBO, Kazuyuki, Tokyo 153-0043 (JP); BABA, Kenichi, Tokyo 153-0043 (JP)
(74) Representative: Winter, Brandl, Fürniss, Hübner, Röss, Kaiser, Polte - Partnerschaft mbB
(86) International application number: PCT/JP2008/069610
(87) International publication number: WO 2009/057619

(56) References cited:
- JP-A- 2004 117 245
- JP-A- 2007 003 244
- JP-A- 2007 034 808

## Description

### TECHNICAL FIELD

The present invention relates to a house change judgment method, a house change judgment program, a method of generating an image for house change judgment, and an image for house change judgment.

### BACKGROUND ART

The below-mentioned documents propose using aerial surveying technology to make a judgment or the like as to whether or not a fixed asset has been changed. Conventionally, a high-resolution image or digital surface model (DSM) data is acquired from an aircraft or the like at two different time points, and those images or pieces of data of the two time points are compared to each other, to thereby judge whether or not a house has been changed between the two time points.
Patent Document 1: JP 2004-117245 A
Patent Document 2: JP 2007-3244 A

### DISCLOSURE OF THE INVENTION

### Problems to be Solved by the Invention

In comparing high-resolution images, there is a problem that registration is difficult to perform with high accuracy, and also, there is a problem that it is difficult to set a threshold for judging whether or not there is a variation because pixel data, such as brightness value, varies depending on an image-taking condition or the like even if no variation has occurred in a house. For this reason, it is difficult to accurately perform automatic judgment regarding a house change, and a person may need to perform a task of spotting a variation in house by making a visual check of the entire image, which is troublesome.

Further, in order to make a judgment regarding a house change by comparing high-resolution images or DSMs, image-taking or data acquisition from above by an aircraft or the like needs to be performed not only at a time point at which a judgment result is required but also at a past time point, such as one year ago or so. Accordingly, there is a problem that, in a region for which the image-taking or the data acquisition has been performed for the first time, it is impossible to make a judgment regarding a house change until the image-taking or the data acquisition is performed again, for example, one year later.

The present invention has been made in order to solve the above-mentioned problems, and therefore has an object to provide a house change judgment method, a house change judgment program, a method of generating an image for house change judgment, and an image for house change judgment, which enable detection of a house change with a relatively low task load, even in a case where image-taking or data acquisition from above has been performed only once.

### Means for Solving the Problems

A house change judgment method according to the present invention includes: a house region extraction step of extracting a house region in which a house exists from a judgment target region based on house shape data acquired in advance; a feature region extraction step of extracting, based on digital surface model data expressed by an altitude of an above-ground surface including a feature, a feature region in which the feature exists, the digital surface model data being acquired from above with regard to each point within the judgment target region; and a candidate region presentation step of comparing the house region and the feature region to obtain a difference region therebetween, and presenting the difference region, to a person who makes a judgment regarding a house change, as a candidate region of house change occurrence between a time point at which the house shape data is acquired and a time point at which the digital surface model data is acquired.

The feature region extraction step may include a normalization step of subtracting, from the altitude indicated by the digital surface model data, an altitude of a ground surface excluding the feature, and generating height data of the feature, and the feature region extraction step may include extracting the feature region based on the height data of the feature.

In addition, the candidate region presentation stepmay include displaying a ground surface image photographed from above in the candidate region in a selective manner.

A house change judgment program according to the present invention causes a computer to execute: a house region extraction procedure of extracting a house region in which a house exists from a judgment target region based on house shape data acquired in advance; a feature region extraction procedure of extracting, based on digital surface model data expressed by an altitude of an above-ground surface including a feature, a feature region in which the feature exists, the digital surface model data being acquired from above with regard to each point within the judgment target region; and a candidate region presentation procedure of comparing the house region and the feature region to obtain a difference region therebetween, and presenting, to a person who makes a judgment regarding a house change, the difference region as a candidate region of house change occurrence between a time point at which the house shape data is acquired and a time point at which the digital surface model data is acquired.

A method of generating an image for house change judgment accordingto the present invention includes : a house region extraction step of extracting a house region in which a house exists from a judgment target region based on house shape data acquired in advance; a feature region extraction step of extracting, based on digital surface model data expressed by an altitude of an above-ground surface including a feature, a feature region in which the feature exists, the digital surface model data being acquired from above with regard to each point within the judgment target region; and an image-for-house-change-judgment generation step of comparing the house region and the feature region to obtain a difference region therebetween, setting the difference region as a candidate region of house change occurrence between a time point at which the house shape data is acquired and a time point at which the digital surface model data is acquired, and generating the image for house change judgment in which the candidate region is displayed in a discriminable manner in a ground surface image photographed from above.

The feature region extraction step may include a normalization step of subtracting, from the altitude indicated by the digital surface model data, an altitude of a ground surface excluding the feature, and generating height data of the feature, and the feature region extraction step may include extracting the feature region based on the height data of the feature.

The image for house change judgment may be an image in which the ground surface image is displayed in the candidate region in a selective manner, and the ground surface image is hidden in a region other than the candidate region.

An image for house change judgment according to the present invention is generated by the method of generating an image for house change judgment described above.

### EFFECT OF THE INVENTION

According to the present invention, by using the house shape data acquired in advance, it is possible to extract the candidate region in which the house has been changed based on the digital surface model (DSM) data obtained at a single time point. In general, the person who makes a judgment regarding a house change only needs to judge whether or not a house change has occurred in the candidate region, and hence a reduced task load may be achieved.

### BRIEF DESCRIPTION OF THE DRAWINGS

FIG. 1 is a flow chart illustrating a general flow of processing of a house change judgment method according to an embodiment of the present invention.
FIGS. 2 are Schematic diagrams illustrating normalization processing with respect to a DSM.
FIG. 3 is a plan view schematically illustrating a binarized NDSM.
FIG. 4 is an explanatory diagram schematically illustrating planar shapes of houses which are displayed based on house polygon data.
FIG. 5 is a plan view schematically illustrating house raster data obtained in association with FIG. 4.
FIG. 6 is a plan view schematically illustrating candidate region data.

### BEST MODE FOR CARRYING OUT THE INVENTION

Hereinafter, description is given of a mode for carrying out the present invention (hereinafter, referred to as embodiment) with reference to the drawings.

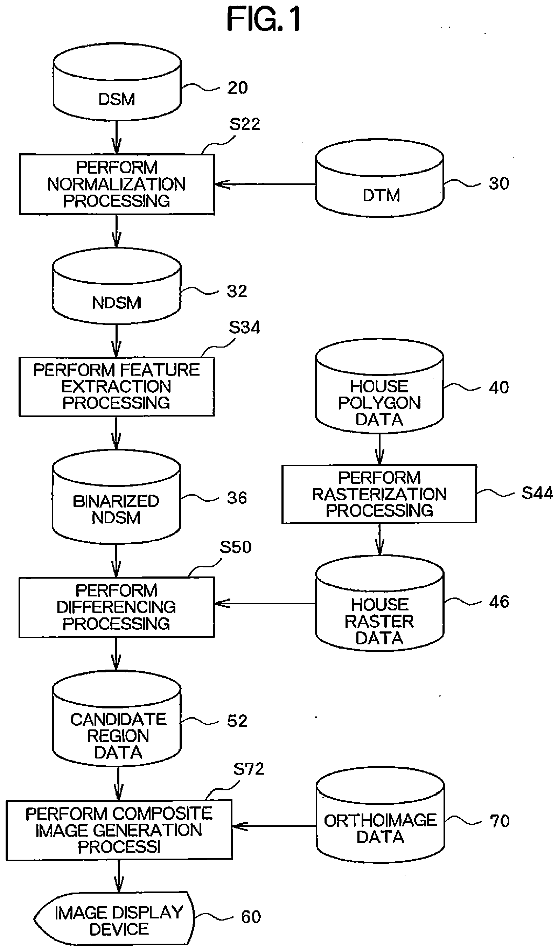

FIG. 1 is a flow chart illustrating a general flow of processing of a house change judgment method according to the embodiment. A DSM 20 acquired with regard to a judgment target region at a time point T1 is subjected to normalization processing S22. In the normalization processing S22, influence from a digital terrain model (DTM) contained in the DSM is removed.

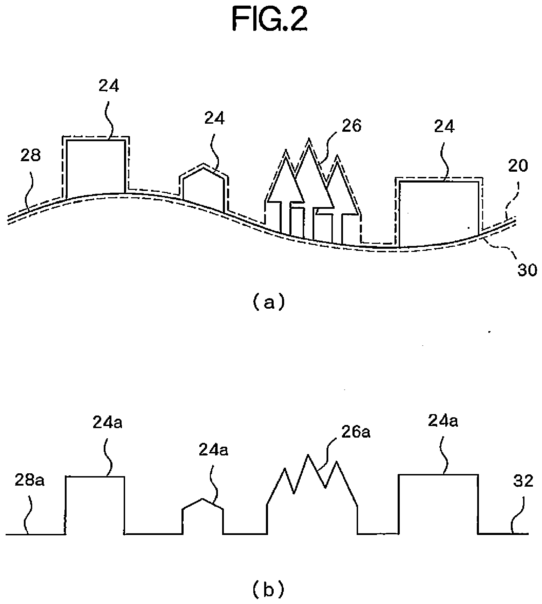

FIGS. 2 are schematic diagrams illustrating the normalization processing. FIG. 2 (a) is a schematic vertical cross section of above-ground features. The DSM 20 represents the horizontal coordinates/altitudes of surfaces of such features as houses 24 and trees 26, and the horizontal coordinates/altitudes of a ground surface 28 which is exposed between the features. Here, the altitude of a house in the DSM 20 is the sum of the altitude of the ground surface below the house and the height of the house. The normalization processing S22 is processing in which a value of a DTM 30 is subtracted from a value of the DSM 20, to thereby generate a normalized digital surface model (NDSM) 32. FIG. 2(b) is a vertical cross section schematically illustrating the NDSM 32 obtained in association with the above-ground features of FIG. 2(a). In the NDSM 32, the features (houses 24a and trees 26a) have height information from the ground surface, whereas a ground surface 28a basically has a height corresponding to a height of 0. For example, as the DTM 30, a model estimated from the DSM through various types of filtering processing may be used. Alternatively, an existing DTM regarding the judgment target region may be used.

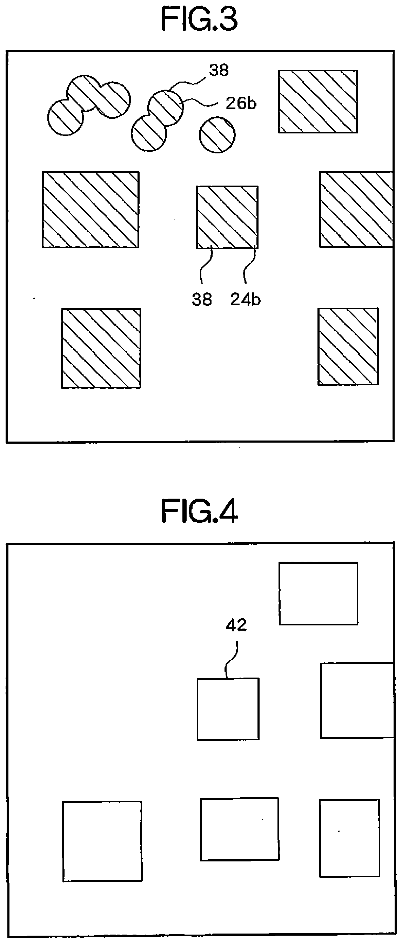

Next, as illustrated in FIG. 1, feature extraction processing S34 for extracting a region in which a feature exists (feature region) from the NDSM 32 obtained in the normalization processing S22 is performed. In the feature extraction processing S34, height data at each sampling point of the NDSM 32 is binarized by using a predetermined threshold, to thereby generate a binarized NDSM 36. The threshold is set to such a value that enables suitable discrimination between the ground surface 28a :and the house 24a illustrated in FIG. 2. As the threshold, a value which is slightly smaller than a general height of a one-story house is suitable, and therefore may be set to approximately 3 m to 5 m, for example. FIG. 3 is a plan view schematically illustrating the binarized NDSM, in which feature regions 38 each corresponding to a region in which the houses 24a or the trees 26a as illustrated in FIG. 2(b) exist are extracted. In addition to regions 24b corresponding to the houses 24a of the NDSM 32, the feature regions 38 may also include, for example, regions 26b corresponding to the trees 26a. For example, in this embodiment, the binarized NDSM 36 has a value of "1" at pixels constituting the feature regions, and a value of "0" at pixels constituting the other region.

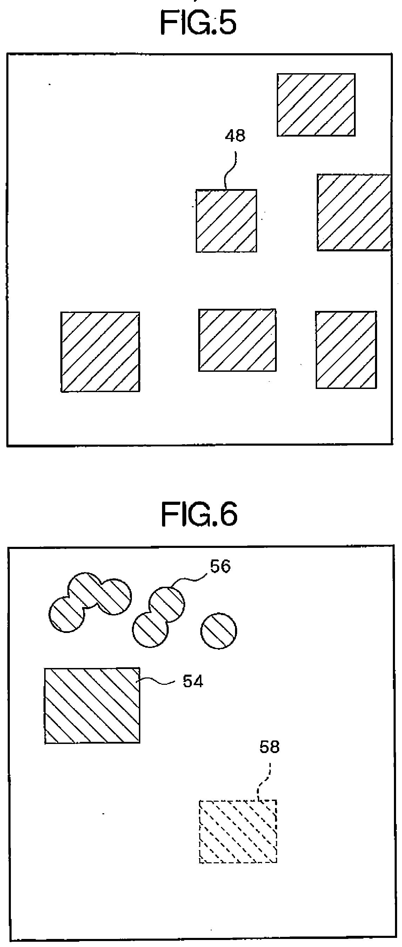

Meanwhile, with regard to the judgment target region, house polygon data 40 is acquired in advance at a time point T0 which precedes T1 (FIG. 1). The house polygon data 40 is expressed in vector form, and, as illustrated in FIG. 4, the planar shape of a house is indicated by an outline frame 42 of the house. With respect to the house polygon data 40, a rasterization processing S44 is performed, to thereby generate house raster data 46. The house raster data 46 may be set as a binarized image in which different values are assigned between a region in which a house exists (house region) and the other region. For example, in this embodiment, the house raster data 46 has a value of "1" at pixels constituting the house region and a value of "0" at pixels constituting the other region. FIG. 5 is a plan view schematically illustrating the house raster data 46 obtained in association with FIG. 4, in which house regions 48 are indicated with the hatched lines.

Note that although description has been given of a configuration in which house shape data acquired in advance serves as the house polygon data 40, the house shape data may be the house raster data 46. For example, if the house raster data 46 generated from the house polygon data 40 is stored, and, in the following house change judgment processing, the house raster data 46 is used as the house
shape data, there is no need to perform the rasterization processing S44 for each house change judgment processing.

Next, the binarized NDSM 36 and the house raster data 46 are compared to obtain difference regions between the two (differencing processing S50 of FIG. 1), and then candidate region data 52 indicating the difference regions is generated. For example, data of each pixel of the candidate region data may be set to a value obtained by subtracting a value of the house raster data 46 from a value of the binarized NDSM 36 at the corresponding pixel. With this configuration, a region corresponding to a house which has been newly constructed between the time points T0 and T1 is assigned a pixel value of "1", a region in which a house has disappeared is assigned a pixel value of "-1", and a region in which no variation has occurred is assigned a pixel value of "0". FIG. 6 is a plan view schematically illustrating the candidate region data 52. In FIG. 6, a region 54 in which a house has been newly constructed, and other new feature regions 56, are assigned the pixel value of "1", which indicates candidate regions of new construction, and a region 58 in which a house has disappeared is assigned the pixel value of "-1", which indicates a candidate region of disappearance.

The candidate region data 52 is displayed as an image on an image display device 60, and the candidate regions are presented to a person who makes a judgment regarding a house change. With this configuration, the person who makes a judgment regarding a house change can essentially detect a house change by examining a portion corresponding to the candidate region in a high-resolution above-ground image or the like. In other words, there is no need to examine the entirety of a high-resolution image, and hence the workload for the person who makes a judgment regarding a house change may be reduced. For example, at the time of displaying the candidate region data 52 as an image, the candidate region of new construction and the candidate region of disappearance may be displayed in a discriminable manner by using different colors, which allows the person who makes a judgment regarding a house change to perform the change judgment more easily.

Further, in this embodiment, a composite image may be generated based on the image representing the candidate region data 52 and, for example, an orthoimage representing orthoimage data 70 of the above-ground features which is created when the DSM is acquired at the time point T1 (composite image generation processing S72 illustrated in FIG. 1), and may be displayed on the image display device 60. For example, in the composite image, the orthoimage may be displayed in a selective manner in the candidate region of new construction or the candidate region of disappearance, and the other region may be set as an image in which the orthoimage is masked. With this configuration, the person who makes a judgment regarding a house change can confirm the new construction or the disappearance of a house in the candidate region more easily based on the orthoimage. For example, the candidate region of new construction may include the feature region 56 which is not a house as described above, but if the orthoimage is superimposed onto the candidate region of new construction and displayed, it becomes possible to discriminate between the region 54 corresponding to the newly-constructed house and the other feature region 56.

Note that for the composite image, another mode may be employed, such as a mode in which the outline of the candidate region is superimposed onto the orthoimage for display.

The above-mentioned house change judgment method may be implemented as a program to be executed on a computer. By executing the program, the computer extracts the feature region 38 in which a feature exists from the judgment target region based on the DSM 20 acquired by an aircraft or the like, and on the other hand, extracts the house region 48 in which a house exists from the judgment target region based on the house polygon data 40. Then, the computer compares the house region 48 and the feature region 38, and then displays, on the image display device 60, a difference region therebetween as a candidate region of house change occurrence between the time point T0 at which the house polygon data 40 is acquired and the time point T1 at which the DSM 20 is acquired, to thereby present the candidate region to the person who makes a judgment regarding a house change. On this occasion, the computer may also perform processing in which an orthoimage of an above-ground feature which is obtained from the orthoimage data 70 is combined with the candidate region for display in a selective manner.

Further, in the above-mentioned embodiment, description has been given of a case where the composite image to be presented to the person who makes a judgment regarding a house change (image for house change judgment) is displayed on the image display device 60 such as a display, but the image for house change judgment may be printed on such a medium as paper.

## Claims

1. A house change judgment method, comprising
acquiring a digital surface model, DSM, (20) comprising DSM values, acquired with regard to a judgment target region at a time point (T1),
subjecting the DSM (20) to normalization processing (S22) wherein, in the normalization processing (S22), influence from a digital terrain model, DTM, (30), contained in the DSM (20) is removed,
the DSM (20) representing horizontal coordinates/altitudes of surfaces of features such as houses (24) and trees (26), and horizontal coordinates/altitudes of a ground surface (28) which is exposed between the features (24, 26),
wherein the altitude of a house in the DSM (20) is the sum of the altitude of the ground surface (28) below the house and the height of the house,
wherein the normalization processing (S22) is a processing in which a value of the DTM (30) is subtracted from a value of the DSM (20), to thereby generate a normalized digital surface model, NDSM, (32),
performing a feature extraction processing (S34),
wherein, in the feature extraction processing (S34), height data at each sampling point of the NDSM (32) is binarized by using a predetermined threshold, to thereby generate a binarized NDSM (36), the threshold being set to such a value that enables discrimination between the ground surface (28a) and a house (24a),
wherein, with regard to the judgment target region and with regard to house polygon data (40), expressed in vector form and indicating a planar shape of a house, and acquired in advance at a second time point (T0) which precedes the first time point (T1), a rasterization processing (S44) is performed with respect to the house polygon data (40), to thereby generate house raster data (46), the house raster data (46) being set as a binarized image in which different values are assigned between a region in which a house exists, i.e. a house region, and another region, and
wherein the binarized NDSM (36) and the house raster data (46) are compared (S50) to obtain difference regions between the two,
candidate region data (52) indicating the difference regions is generated, and
the candidate region data (52) is displayed as an image on an image display device (60).

2. The house change judgment method according to claim 1, wherein displaying the candidate region data comprises displaying a ground surface image photographed from above in the candidate regions.

3. The house change judgment method according to claim 1, wherein displaying the candidate region data comprises generating an image for house change judgment in which the candidate regions are displayed in a discriminable manner in a ground surface image photographed from above.

4. The house change judgment method according to claim 3, wherein in the generated image the ground surface image is displayed in the candidate regions, and the ground surface (28) is hidden in a region other than the candidate regions.

5. Computer readable medium comprising instructions for causing a computer to execute all of the method steps of any one of claims 1 to 4.

## Patentansprüche

1. Hausänderungs-Beurteilungsverfahren, aufweisend
Gewinnen eines digitalen Oberflächenmodells, DSM (20), das DSM-Werte aufweist, die mit Bezug zu einer Beurteilungs-Zielregion zu einem Zeitpunkt (T1) gewonnen sind,
Unterziehen des DSM (20) einer Normalisierungsverarbeitung (S22), bei der in der Normalisierungsverarbeitung (S22) ein Einfluss von einem digitalen Terrain-Modell, DTM (30), das in dem DSM (20) enthalten ist, entfernt ist,
wobei das DSM (20) horizontale Koordinaten / Höhen von Oberflächen von Merkmalen wie etwa von Häusern (24) und Bäumen (26), und horizontale Koordinaten / Höhen von einer Bodenoberfläche (28) repräsentiert, die zwischen den Merkmalen (24, 26) freigelegt ist,
wobei die Höhe eines Hauses in dem DSM (20) die Summe aus der Höhe der Bodenoberfläche (28) unterhalb des Hauses und der Höhe des Hauses ist,
wobei die Normalisierungsverarbeitung (S22) eine Verarbeitung ist, bei der ein Wert des DTM (30) von einem Wert des DSM (20) subtrahiert wird, um hierdurch ein normalisiertes digitales Oberflächen-Modell, NDSM (32) zu generieren,
Durchführen einer Merkmals-Extraktions-Verarbeitung (S34),
wobei in der Merkmals-Extraktions-Verarbeitung (S34) Höhendaten bei jedem Abtastpunkt des NDSM (32) binärisiert werden, indem ein vorbestimmter Schwellenwert benutzt wird, um hierdurch ein binarisiertes NDSM (36) zu generieren, wobei der Schwellenwert auf einen solchen Wert festgelegt ist, der eine Diskriminierung zwischen der Bodenoberfläche (28a) und einem Haus (24a) erlaubt,
wobei mit Bezug zu der Beurteilungs-Ziel-Region und mit Bezug zu Haus-Polygon-Daten (40), die in Vektorform ausgedrückt sind und eine planare Form eines Hauses angeben und vorab zu einem zweiten Zeitpunkt (T0) gewonnen sind, der dem ersten Zeitpunkt (T1) vorhergeht, eine Rasterisierungs-Verarbeitung (S44) mit Bezug zu den Haus-Polygon-Daten (40) ausgeführt wird, um hierdurch Haus-Raster-Daten (46) zu generieren, wobei die Haus-Raster-Daten (46) als ein binarisiertes Bild festgelegt sind, bei dem unterschiedliche Werte zwischen einer Region, in der ein Haus existiert, d. h. einer Haus-Region, und einer anderen Region zugeordnet sind, und
wobei das binarisierte NDSM (36) und die Haus-Raster-Daten (46) verglichen werden (S50), um Differenz-Regionen zwischen den beiden zu erhalten,
wobei Kandidaten-Region-Daten (52), die die Differenzregionen anzeigen, generiert werden, und
die Kandidaten-Region-Daten (52) als ein Bild auf einer Bild-Anzeige-Vorrichtung (60) dargestellt werden.

2. Das Hausänderungs-Beurteilungsverfahren nach Anspruch 1, bei dem die Kandidaten-Region-Daten angezeigt werden, die ein Boden-Oberflächen-Bild anzeigen, das von oben in den Kandidaten-Regionen fotografiert ist.

3. Das Hausänderungs-Beurteilungsverfahren nach Anspruch 1, bei dem das Anzeigen der Kandidaten-Region-Daten das Generieren eines Bildes für eine Hausänderungs-Beurteilung umfasst, in dem Kandidaten-Regionen in einer unterscheidbaren Weise in einem Boden-Oberflächen-Bild angezeigt werden, das von oben fotografiert ist.

4. Das Hausänderungs-Beurteilungsverfahren nach Anspruch 3, bei dem in dem erzeugten Bild das Boden-Oberflächen-Bild in den Kandidaten-Regionen angezeigt wird, und die Boden-Oberflächen (28) in einer Region, die eine andere als die Kandidaten-Regionen ist, verborgen sind.

5. Computer-lesbares Medium, das Instruktionen für die Veranlassung eines Computers aufweist, um alle die Verfahrensschritte von einem beliebigen der Ansprüche 1 bis 4 auszuführen.

## Revendications

1. Procédé d'évaluation de changement de maison, comprenant les étapes consistant à :
acquérir un modèle de surface numérique, DSM (20) *(Digital Surface Model)* comprenant des valeurs DSM, acquises par rapport à une région cible d'évaluation à un point donné dans le temps (T1).
soumettre le DSM (20) à un processus de normalisation (S22) dans lequel, dans le processus de normalisation (S22), l'influence d'un modèle de terrain numérique DTM (30) *(Digital Terrain Model)* contenu dans le DSM (20) est retirée,
le DSM (20) représentant des coordonnées/altitudes horizontales de surfaces de caractéristiques telles que maisons (24) et arbres (26), et des coordonnées horizontales/altitudes d'une surface du sol (28) qui est exposée entre les caractéristiques (24, 26),
dans lequel l'altitude d'une maison dans le DSM (20) est la somme de l'altitude de la surface du sol (28) sous la maison et la hauteur de la maison,
dans lequel le processus de normalisation (S22) est un processus dans lequel une valeur du DTM (30) est soustraite d'une valeur du DSM (20) pour ainsi générer un modèle de surface numérique NDSM (32) *(Normalized Digital Surface Model),*
effectuer un traitement d'extraction de caractéristique (S34),
dans lequel, dans le traitement d'extraction de caractéristique (S34), les données de hauteur en chaque point d'échantillonnage du NDSM (32) sont binarisées en utilisant un seuil prédéterminé, afin de générer ainsi un NDSM binarisé (36), le seuil étant défini à une valeur telle qu'elle permette la discrimination entre la surface du sol (28a) et une maison (24a) ;
dans lequel, concernant la région cible d'évaluation et concernant les données polygonales de maison (40), exprimées sous forme vectorielle et indiquant une forme planaire d'une maison, et acquises par avance en un second point dans le temps (T0) qui précède le premier point dans le temps (T1), un traitement de rastérisation (S44) est effectué par rapport aux données de polygone de maison (40), pour générer ainsi des données de rastérisation de maison (46), les données de rastérisation de maison (46) étant définies comme une image binarisée dans laquelle différentes valeurs sont assignées entre une région dans laquelle une maison existe, i.e. une région de maison, et une autre région, et
dans lequel le NDSM binarisé (36) et les données de rastérisation de maison (46) sont comparées (S50) pour obtenir des régions de différence entre les deux,
des données de région candidate (52) indiquant les régions de différence sont générées, et les données de région candidates (52) sont affichées sous forme d'image sur un dispositif d'affichage d'image (60).

2. Procédé d'évaluation de changement de maison selon la revendication 1 dans lequel l'affichage des données de région candidate comprend l'affichage d'une image de surface du sol photographiée de façon aérienne dans les régions candidates.

3. Procédé d'évaluation de changement de maison selon la revendication 1, dans lequel l'affichage des données de région candidate comprend la génération d'une image pour l'évaluation de changement de maison dans laquelle les régions candidates sont affichées d'une manière discriminable dans une image de surface du sol photographiée d'en haut.

4. Procédé d'évaluation de changement de maison selon la revendication 3, dans lequel dans l'image générée, l'image de surface du sol est affichée dans les régions candidates, et la surface du sol (28) est cachée dans une région autre que les régions candidates.

5. Médium lisible par ordinateur comprenant des instructions pour faire qu'un ordinateur exécute toutes les étapes de procédé selon l'une quelconque des revendications 1 à 4.
